# EUROPÄISCHE PATENTSCHRIFT

(11) **EP 3 459 337 B1**
(45) Veröffentlichungstag und Bekanntmachung des Hinweises auf die Patenterteilung: **04.05.2022**
(21) Anmeldenummer: 18179309.2
(22) Anmeldetag: 22.06.2018
(51) Int. Cl.: A01D 41/127

(54) **LANDWIRTSCHAFTLICHE ARBEITSMASCHINE**
AGRICULTURAL MACHINE
ENGIN AGRICOLE

(30) Priorität: 15.09.2017 DE 102017121519
(43) Veröffentlichungstag der Anmeldung: 27.03.2019
(73) Patentinhaber: CLAAS Selbstfahrende Erntemaschinen GmbH, 33428 Harsewinkel (DE)
(72) Erfinder: Quincke, Gunnar, 59494 Soest (DE); Middelberg, René, 49080 Osnabrück (DE)
(74) Vertreter: CLAAS Gruppe

(56) Entgegenhaltungen:
- EP-A1- 1 825 740
- EP-A1- 2 915 422
- EP-A2- 1 905 292

## Beschreibung

Die vorliegende Erfindung betrifft eine landwirtschaftliche Arbeitsmaschine gemäß dem Oberbegriff von Anspruch 1 sowie ein Verfahren zum Betreiben einer landwirtschaftlichen Arbeitsmaschine gemäß dem Oberbegriff von Anspruch 15.

Landwirtschaftliche Arbeitsmaschinen, zu denen insbesondere selbstfahrende Erntemaschinen wie Mähdrescher und Feldhäcksler zählen, weisen regelmäßig verschiedene Arbeitsaggregate auf, die bei der Verarbeitung von Erntegut mit wechselnden Parametern betrieben werden können. Die Einstellung dieser Parameter wird auch als Maschinenparametereinstellung bezeichnet. Für einen optimalen Betrieb der landwirtschaftlichen Arbeitsmaschine empfiehlt es sich, die Maschinenparametereinstellungen in Abhängigkeit von verschiedenen Randbedingungen einzustellen, wozu insbesondere die Art, Menge und Beschaffenheit des Feldbestands und des Ernteguts zählt.

Eine bedeutsame solche Randbedingung stellt die Feuchte des Ernteguts im Erntegutstrom insgesamt dar, welche im Wesentlichen durch die Feuchtigkeit des Strohs (Strohfeuchte) bestimmt wird. Eine genaue Bestimmung der Feuchtigkeit des Ernteguts ist für eine optimale Einstellung der Maschinenparameter sehr hilfreich.

Aus dem Stand der Technik ist es einerseits bekannt, die Feuchtigkeit des Ernteguts durch einen im Einzugskanal eines Mähdreschers angeordneten Feuchtigkeitssensor zu ermitteln. Auf diese Weise kann laufend und zeitnah zur Aufnahme des Ernteguts durch die landwirtschaftliche Arbeitsmaschine die Feuchtigkeit des Ernteguts ermittelt und auf sie reagiert werden. Ist der Feuchtigkeitssensor als kapazitiver Sensor ausgebildet, ist die Messung der Feuchtigkeit vergleichsweise ungenau. Das liegt daran, dass ein solcher kapazitiver Sensor im Wesentlichen die gesamte Menge des an ihm vorbeigeführten Wassers misst und ermittelt. Diese Gesamtwassermenge ist aber nicht nur von der relativen Feuchtigkeit des Ernteguts abhängig, sondern auch von der absolut aufgenommenen Menge an Erntegut zum Zeitpunkt der Messung. Folglich wird die gemessene Feuchtigkeit bei einer höheren Durchsatzmenge m des Ernteguts häufig nach oben verfälscht und entsprechend bei einer niedrigeren Durchsatzmenge nach unten.

Um ein genaueres Messergebnis zu erhalten, ist es aus der EP 1 905 292 A2, von welcher die vorliegende Erfindung ausgeht, bekannt, die Feuchte des Ernteguts mittels eines Mikrowellensensors zu bestimmen. Dieser erlaubt es einerseits, die Wassermasse im Sichtfeld des Sensors zu ermitteln, andererseits aber auch die Dichte des Ernteguts, welches am Sichtfenster oder Abtastbereich des Sensors vorbeigeführt wird. Letzteres erfolgt dadurch, dass die Ausbreitungsgeschwindigkeit der ausgesendeten Mikrowellen mit der Ausbreitungsgeschwindigkeit der vom Erntegut reflektierten Mikrowellen verglichen wird, wobei sich aus der Abnahme der Ausbreitungsgeschwindigkeit ein Dämpfungsmaß ergibt, aus dem unter Hinzuziehung hinterlegter Kennlinien die Gutdichte abgeleitet werden kann. Dadurch, dass nun die Dichte zur Verfügung steht, kann die Wassermasse in Relation zur Dichte gesetzt werden und somit die Genauigkeit der Feuchtebestimmung erhöht werden. Die solchermaßen ermittelte Feuchte wird auch gutdichtekompensierte Feuchte genannt. Ein solcher Mikrowellensensor ist aber relativ teuer.

Ausgehend von diesem Stand der Technik besteht das Problem der Erfindung darin, eine landwirtschaftliche Arbeitsmaschine so auszugestalten und weiterzubilden, dass auf kostengünstige Weise eine möglichst genaue Bestimmung der Feuchtigkeit im Erntegut ermöglicht wird.

Das genannte Problem wird bei einer landwirtschaftlichen Arbeitsmaschine mit den Merkmalen des Oberbegriffs von Anspruch 1 durch die Merkmale des kennzeichnenden Teils von Anspruch 1 gelöst.

Wesentlich ist die Erkenntnis, dass zum Zwecke einer Feuchtewertkorrektur einerseits durch Vorsehen einer Volumensensoranordnung das Durchsatzvolumen bestimmt und berücksichtigt werden kann und andererseits durch Vorsehen einer Durchsatzsensoranordnung die Durchsatzmenge bzw. -masse bestimmt und berücksichtigt werden kann, wobei sich aus diesen beiden Werten vorzugsweise auch die Dichte des jeweiligen Erntegutstroms oder -teilstroms berechnen lässt, die sich dann insbesondere unmittelbar berücksichtigen lässt. "Erntegutstrom" meint hier den Gesamtstrom aus allen Erntegutbestandteilen, der insbesondere neben dem Strohanteil auch noch den Kornanteil umfasst. Entsprechend ist ein "Erntegutteilstrom" ein um mindestens einen Erntegutbestandteil reduzierter Strom, also beispielsweise ein Gutstrom überwiegend aus Strohpartikeln, wobei hier der Kornanteil im Wesentlichen abgetrennt wurde, oder ein Gutstrom überwiegend aus Körnern, wobei hier der Strohanteil im Wesentlichen abgetrennt wurde.

Auf Basis der für das Volumen und für die Menge bzw. Masse ermittelten Werte, also beispielsweise auf Basis des Erntegutvolumens und der Erntegutmenge (Strohanteil und Kornanteil zusammen) oder auf Basis des reinen Kornvolumens und der reinen Kornmenge (Kornanteil ohne Strohanteil) oder auf Basis des reinen Strohvolumens und der reinen Strohmenge (Strohanteil ohne Kornanteil), lässt sich dann der für den jeweiligen Strom oder Teilstrom gemessene Feuchtigkeitswert bzw. das entsprechend erzeugte Feuchtigkeitssignal nachkorrigieren. Entsprechendes ist auch durch Berücksichtigung eines entsprechenden Dichtewertes möglich. Der im Ergebnis erhaltene Wert für die Gutfeuchte ist dementsprechend genauer als der von der Feuchtigkeitssensoranordnung gemessene Wert.

Durch die vorschlagsgemäße Lösung ist ebenfalls eine besonders genaue Bestimmung der Feuchtigkeit im Erntegut möglich, dies aber gegenüber dem Stand der Technik mit deutlich kostengünstigeren Mitteln. So muss bei der vorschlagsgemäßen Lösung insbesondere kein teurer Mikrowellensensor mehr eingesetzt werden, sondern zur Feuchtemessung reicht ein einfacher kapazitiver Sensor aus. Auch zur Volumen- und Mengenmessung kann eine vergleichsweise einfache und kostengünstige Sensorik eingesetzt werden. Ein weiterer Vorteil ist, dass durch die Bestimmung von Volumen und Masse die Dichte des Ernteguts im Hauptstrom bzw. der Erntegutbestandteile im jeweiligen Teilstrom berechnet werden kann und nicht zwingend aus einem Dämpfungsmaß abgeleitet werden muss, wodurch die Genauigkeit noch erhöht wird. Eine händische Dichtemessung ist genauso wenig erforderlich wie das Vorsehen einer separaten Kalibrierwaage in einem Bypass.

Die beschriebene Nachkorrektur des Gutfeuchtesignals wird insbesondere über eine Datenverarbeitungseinrichtung durchgeführt. Nach der Ausgestaltung gemäß Anspruch 2 bestimmt bzw. berechnet die Datenverarbeitungseinrichtung aus dem ermittelten Durchsatzvolumen und der ermittelten Durchsatzmenge m die jeweilige Gutdichte, beispielsweise die Gutdichte für das Erntegut oder für den reinen Kornanteil oder für den reinen Strohanteil. Auf dieser Basis erfolgt dann die Anpassung des Gutfeuchtesignals, was auch Dichtekompensation genannt wird. Die Nachkorrektur bzw. Dichtekompensation auf Basis der Gutdichte erfolgt insbesondere mittels einer hinterlegten Feuchtekorrekturfunktion (Anspruch 3). Eine solche Feuchtekorrekturfunktion kann durch eine Korrekturkurve oder aber auch durch eine Korrekturfläche (Flächenkurve) gegeben sein. Bei einer Korrekturkurve wäre ein entsprechender Korrekturfaktor für die Gutfeuchte insbesondere abhängig von der Gutdichte. Bei einer Flächenkurve als Feuchtekorrekturfunktion wäre der Korrekturfaktor von zwei Werten abhängig, beispielsweise vom Durchsatzvolumen einerseits und der Durchsatzmenge m andererseits.

Die Ansprüche 4 bis 6 definieren bevorzugte Anbringungsstellen für die Volumensensoranordnung, die Feuchtigkeitssensoranordnung und/oder die Durchsatzsensoranordnung bzw. deren zugeordnete Sensoren.

In den Ansprüchen 7 und 8 sind besonders bevorzugte Sensoren zur Bestimmung eines Durchsatzvolumens und entsprechend bevorzugte Anbringungsstellen definiert.

Anspruch 9 definiert einen besonders bevorzugten Feuchtigkeitssensor, wobei Anspruch 10 entsprechend bevorzugte Anbringungsstellen definiert.

In den Ansprüchen 11 bis 14 sind besonders bevorzugte Sensoren zur Bestimmung der Durchsatzmenge sowie entsprechend bevorzugte Anbringungsstellen definiert.

Nach der Lehre gemäß Anspruch 15, der eigenständige Bedeutung zukommt, wird ein Verfahren zum Betreiben einer landwirtschaftlichen Arbeitsmaschine, insbesondere einer wie zuvor definierten Arbeitsmaschine, beansprucht, bei dem Erntegut über eine Einzugsanordnung aufgenommen wird, das Durchsatzvolumen des Ernteguts oder mindestens eines Erntegutbestandteils (Stroh oder Korn) bestimmt wird, die Feuchtigkeit des aufgenommenen Ernteguts oder mindestens eines Erntegutbestandteils gemessen wird, die Durchsatzmenge des Ernteguts oder mindestens eines Erntegutbestandteils bestimmt wird und schließlich basierend auf dem ermittelten Durchsatzvolumen und der ermittelten Durchsatzmenge m ein Gutfeuchtesignal nachkorrigiert wird, das basierend auf der Feuchtigkeitsmessung erzeugt worden ist.

Im Folgenden wird die Erfindung anhand einer lediglich Ausführungsbeispiele darstellenden Zeichnung näher erläutert. In der Zeichnung zeigt
- Fig. 1: eine schematische Seitenansicht einer vorschlagsgemäßen landwirtschaftlichen Arbeitsmaschine a) gemäß einem ersten Ausführungsbeispiel und b) gemäß einem zweiten Ausführungsbeispiel und
- Fig. 2: ein Ablaufdiagramm zur schematischen Darstellung der Funktionsweise der Nachkorrektur eines Gutfeuchtesignals bei einer landwirtschaftlichen Arbeitsmaschine gemäß Fig. 1.

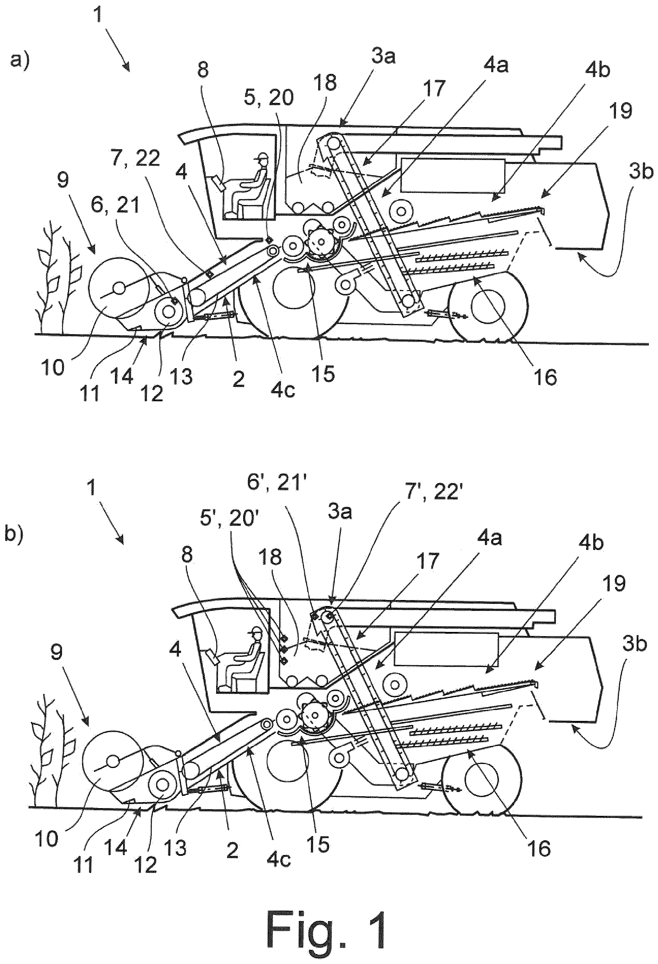

Die in den Fig. 1a und 1b dargestellte vorschlagsgemäße landwirtschaftliche Arbeitsmaschine 1, bei der es sich hier beispielhaft um einen Mähdrescher 1 handelt, ist zur Verarbeitung von Erntegut eingerichtet und umfasst eine Einzugsanordnung 2 zum Aufnehmen des Ernteguts, mindestens eine Abgabeanordnung 3a, 3b zur Abgabe von Erntegutbestandteilen, insbesondere Korn einerseits und Stroh andererseits, wobei ein Förderkanal 4 zum Fördern des Ernteguts und der Erntegutbestandteile vom Einzugskanal 2 über abzweigende Förderkanalabschnitte 4a bzw. 4b zur jeweiligen Abgabeanordnung 3a bzw. 3b verläuft.

Die landwirtschaftliche Arbeitsmaschine 1 weist ferner verschiedene Anordnungen zur Bestimmung oder Messung bestimmter Randbedingungen auf, die zur Einstellung unterschiedlichster Maschinenparametereinstellungen herangezogen werden können. So ist zunächst eine Volumensensoranordnung 5, 5' zur Bestimmung eines Durchsatzvolumen V des Ernteguts oder mindestens eines Erntegutsbestandteils wie insbesondere des Korns vorgesehen. Die Volumensensoranordnung 5, 5' erlaubt es, das jeweilige Volumen pro Zeiteinheit zu bestimmen. Ferner ist eine Feuchtigkeitssensoranordnung 6, 6' zur Messung einer Feuchtigkeit δ des aufgenommenen Ernteguts oder des mindestens einen Erntegutbestandteils, hier des Korns, vorgesehen, die auf Basis der gemessenen Feuchtigkeit δ ein Gutfeuchtesignal erzeugt. Die Feuchtigkeitssensoranordnung 6, 6' misst hier und vorzugsweise die Wassermasse pro Volumeneinheit. Schließlich verfügt die landwirtschaftliche Arbeitsmaschine 1 auch über eine Durchsatzsensoranordnung 7, 7' zur Bestimmung einer Durchsatzmenge m des Ernteguts oder des mindestens einen Erntegutbestandteils, hier des Korns. Die Durchsatzsensoranordnung 7, 7' ermittelt die jeweilige Menge, das heißt die Masse, des Ernteguts oder des jeweiligen Erntegutbestandteils pro Zeiteinheit.

Wesentlich ist nun, dass die von der Volumensensoranordnung 5, 5' und von der Durchsatzsensoranordnung 7, 7' ermittelten Werte für das jeweilige Volumen V und für die jeweilige Menge bzw. Masse m und/oder die daraus berechnete Gutdichte p dazu herangezogen werden, das von der Feuchtigkeitssensoranordnung 6, 6' erzeugte Gutfeuchtesignal nachzukorrigieren. Dies wird hier und vorzugsweise von einer Datenverarbeitungseinrichtung 8 durchgeführt, die ebenfalls Bestandteil der landwirtschaftlichen Arbeitsmaschine 1 ist und die ermittelten bzw. gemessenen Werte der Sensoranordnungen empfängt und verarbeitet. So basiert das Gutfeuchtesignal hier auf einem Feuchtigkeitswert, der der gesamten Menge des sensierten Wassers entspricht. Diese Gesamtwassermenge bestimmt sich aber nicht nur aus der relativen Feuchtigkeit δ des Ernteguts bzw. des entsprechenden Erntegutbestandteils, sondern auch aus der absolut aufgenommenen Menge an Erntegut bzw. an dem jeweiligen Erntegutbestandteil. Die Nachkorrektur erlaubt es, die gemessene Feuchte in Relation zur aufgenommenen Erntegutmenge m und dem Erntegutvolumen V und/oder zur Gutdichte p zu setzen.

Ein Nachkorrigieren im vorschlagsgemäßen Sinne kann eine beliebige Anpassung des Gutfeuchtesignals umfassen, welche von dem bestimmten Durchsatzvolumen V und der bestimmten Durchsatzmenge m und insbesondere von der aus Durchsatzvolumen V und Durchsatzmenge m bestimmten bzw. berechneten Gutdichte p abhängig ist. Diese Anpassung kann sowohl durch eine prozentuale Anpassung, etwa durch eine Multiplikation, durch eine Addition oder Substraktion eines Verschiebungswertes oder durch das Zuweisen eines Festwertes an das Gutfeuchtesignal geschehen. Dieses Nachkorrigieren kann auch nur für einen bestimmten Wertebereich entweder der gemessenen Feuchtigkeit δ oder des gemessenen Durchsatzvolumen V oder der gemessenen Durchsatzmenge m oder der ermittelten Gutdichte p gelten. Es ist also nicht zwingend notwendig, dass jederzeit unter allen Bedingungen das Gutfeuchtesignal durch die Nachkorrektur verändert wird. Das Nachkorrigieren kann sowohl das Ersetzen des vorherigen Gutfeuchtesignals als auch das Erzeugen eines neuen, auf dem ursprünglichen Gutfeuchtesignal basierenden Gutfeuchtesignals, welches die Nachkorrektur berücksichtigt, umfassen.

Bei der Einzugsanordnung 2 kann es sich um eine Vorsatzanordnung 9 handeln, die wie in den Fig. 1a und 1b dargestellt eine Haspel 10, einen Messerbalken 11 und eine Einzugsschnecke 12 umfasst. Die Vorsatzanordnung 9 umfasst ferner ebenso einen Schrägförderer 13, der in einem Abschnitt des Förderkanals 4, dem sogenannten Einzugskanal 4c, angeordnet ist. Die Haspel 10, der Messerbalken 11 sowie die Einzugsschnecke 12 können hier zusammengefasst als Schneidwerk 14 bezeichnet werden, so dass das von dem Schneidwerk 14 abgeschnittene und eingezogene Material das Erntegut bildet, das von dem Schrägförderer 13 zur weiteren Verarbeitung im Mähdrescher 1 weitergefördert wird. Somit wird das Erntegut mittels der Einzugsanordnung 2 aufgenommen.

Von dem Schrägförderer 13 gelangt das aufgenommene Erntegut zum Dreschwerk 15, in welchem das Erntegut in zwei Teilströme aufgeteilt wird, wobei der eine Teilstrom überwiegend den Erntegutbestandteil Stroh und der andere Teilstrom überwiegend den Erntegutbestandteil Korn umfasst. Das Korn wird dann über eine Reinigungsvorrichtung 16 und einen nachgeschalteten Kornelevator 17 einem Korntank 18 zugeführt, wobei hier das obere Ende des Kornelevators 17, an welchem das Korn in den Korntank 18 ausgeworfen wird, als Abgabeanordnung 3a für das Korn definiert ist. Der andere, überwiegend Stroh umfassende Teilstrom wird über eine Trenneinrichtung 19, in der weitere Kornbestandteile abgetrennt werden, der weiteren Abgabeanordnung 3b am hinteren Ende des Mähdreschers 1 zugeführt.

Bevorzugt ist es, dass die Feuchtigkeit δ, das Durchsatzvolumen V und/oder die Durchsatzmenge m im Wesentlichen laufend ermittelt wird/werden. Dies bedeutet, dass das Gutfeuchtesignal bzw. ein dem Durchsatzvolumen V entsprechendes Signal bzw. ein der Durchsatzmenge m entsprechendes Signal entweder kontinuierlich oder jedenfalls mit einem geringen Zeitabstand zwischen den Erfassungszeitpunkten erzeugt wird. Somit kann das Gutfeuchtesignal, das Durchsatzvolumen V und/oder die Durchsatzmenge m online und damit quasi in Echtzeit erzeugt bzw. bestimmt werden. Aus allem zusammen ergibt sich bevorzugt, dass das Gutfeuchtesignal im Wesentlichen laufend basierend auf dem bestimmten Durchsatzvolumen V und der bestimmten Durchsatzmenge m nachkorrigiert wird. Wird aus dem Durchsatzvolumen V und der Durchsatzmenge m die Gutdichte p bestimmt und auf deren Basis das Gutfeuchtesignal nachkorrigiert, spricht man auch von einer Dichtekompensation. Das nachkorrigierte bzw. dichtekompensierte Gutfeuchtesignal ist damit jederzeit aktuell.

Weiter ist bevorzugt, dass das Gutfeuchtesignal basierend auf dem ermittelten Durchsatzvolumen V und der ermittelten Durchsatzmenge m bzw. basierend auf der bestimmten Gutdichte p mittels einer Feuchtekorrekturfunktion f nachkorrigiert wird. Eine solche Feuchtekorrekturfunktion f kann durch eine Korrekturkurve oder eine Korrekturfläche, insbesondere in der Datenverarbeitungseinrichtung 8, hinterlegt sein. Ein Beispiel für eine Korrekturkurve ist, dass jedem Gutdichtewert p ein bestimmter Korrekturfaktor zugeordnet ist, mit welchem das Gutfeuchtesignal beispielsweise multipliziert wird. Ein Beispiel für eine Korrekturfläche ist, dass einem Korrekturfaktor jeweils ein Wert für das Durchsatzvolumen V und ein Wert für die Durchsatzmenge m zugeordnet ist, wobei dann mit diesem Korrekturfaktor das Gutfeuchtesignal beispielsweise multipliziert wird.

Die einzelnen Sensoranordnungen, die für die Bestimmung des nachkorrigierten bzw. dichtekompensierten Gutfeuchtesignals maßgeblich sind, hier und vorzugsweise also die Volumensensoranordnung 5, 5', die Feuchtigkeitssensoranordnung 6, 6' und die Durchsatzsensoranordnung 7, 7', sind bevorzugt am und/oder im Förderkanal 4 bzw. einem Abschnitt 4a, 4b, 4c davon, der von dem Erntegut bzw. einem Erntegutbestandteil durchströmt wird, angeordnet. Bei dem Ausführungsbeispiel in Fig. 1a sind die Volumensensoranordnung 5, die Feuchtigkeitssensoranordnung 6 und die Durchsatzsensoranordnung 7 jeweils im Einzugskanal 4c angeordnet, wobei der Förderbereich der Einzugsschnecke 12 hier als Teil des Einzugskanals 4c definiert ist. Die Volumensensoranordnung 5 umfasst hier und vorzugsweise einen Befüllstromsensor 20 zur Bestimmung des Volumens des Erntegutstroms, der hier beispielhaft im Einzugskanal 4c am oberen Ende des Schrägförderers 13 positioniert ist. Die Feuchtigkeitssensoranordnung 6 weist hier und vorzugsweise einen kapazitiven Feuchtigkeitssensor 21 auf, der wie gesagt die Wassermasse pro Volumeneinheit in einem bestimmten Abtastbereich misst und ein entsprechendes Gutfeuchtesignal erzeugt. Der Feuchtigkeitssensor 21 ist hier und vorzugsweise am vorderen Ende des Einzugskanals 4c an der Einzugsschnecke 12 positioniert. Grundsätzlich wäre es auch denkbar, den Feuchtigkeitssensor 21 im Bereich des Schrägförderers 13 zu positionieren.

Fig. 1b zeigt ein weiteres Ausführungsbeispiel einer landwirtschaftlichen Arbeitsmaschine 1, wobei hier im Unterschied zur Fig. 1a die Sensoranordnungen in einem Abschnitt 4a des Förderkanals 4 angeordnet sind, der nach einem Abtrennen eines Erntegutbestandteils, hier des Strohs, von dem übrigen Erntegut, hier dem Korn, durchströmt wird. Die Volumensensoranordnung 5' weist hier und vorzugsweise mindestens einen Korntakfüllstandssensor 20', hier beispielsweise drei Korntankfüllstandssensoren 20', zur Bestimmung des Füllstands im Korntank 18 auf, wobei aus dem Füllstand bzw. Füllstandsänderungen im Korntank 18 das Durchsatzvolumen V des Korns bestimmt werden kann. Die Feuchtigkeitssensoranordnung 6' weist auch in diesem Ausführungsbeispiel einen kapazitiven Feuchtigkeitssensor 21' auf, wobei dieser hier und vorzugsweise am oberen Ende des Kornelevators 17 positioniert ist. Die Durchsatzsensoranordnung 7' weist hier und vorzugsweise einen Kornsensor 22' zur Bestimmung der Kornmenge bzw. -masse m auf, wobei auch der Kornsensor 22' hier und vorzugsweise im Kornelevator 17 an dessen oberem Ende (Elevatorkopf) positioniert ist.

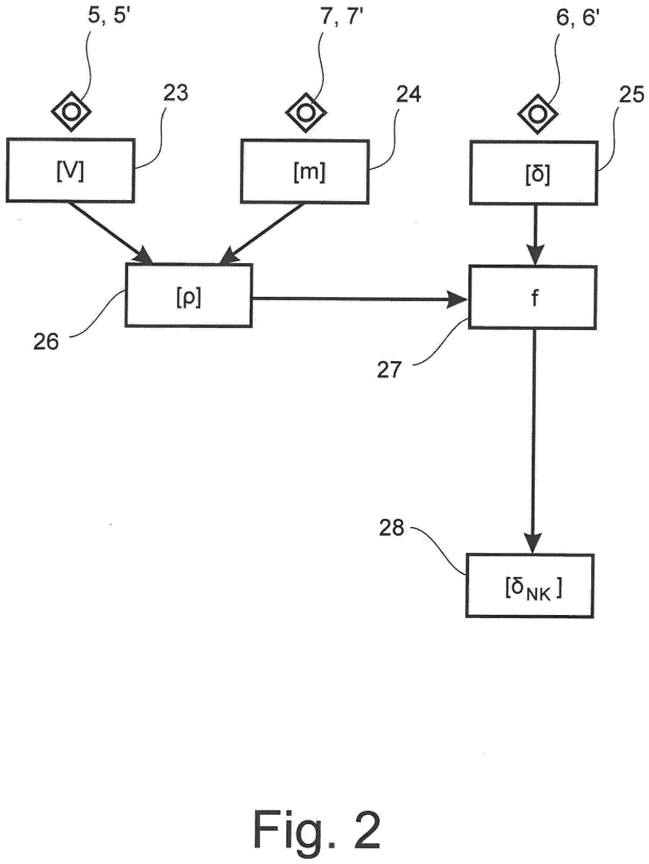

In Fig. 2 ist schließlich noch einmal das Grundprinzip der bei der vorschlagsgemäßen landwirtschaftlichen Arbeitsmaschine 1 durchgeführten Nachkorrektur des Gutfeuchtesignals anhand einer Dichtekompensation dargestellt. So wird in 23 von der jeweiligen Volumensensoranordnung 5, 5' zunächst das Durchsatzvolumen V des Ernteguts oder mindestens eines Erntegutbestandteils bestimmt. In 24 wird, insbesondere parallel, von der jeweiligen Durchsatzsensoranordnung 7, 7' die Durchsatzmenge m bzw. -masse m des Ernteguts oder des mindestens einen Erntegutbestandteils bestimmt. Außerdem wird in 25, ebenfalls insbesondere parallel, von der jeweiligen Feuchtigkeitssensoranordnung 6, 6' die Feuchtigkeit δ des aufgenommenen Ernteguts oder des mindestens einen Erntegutbestandteils gemessen. Aus dem ermittelten Durchsatzvolumen V und der ermittelten Durchsatzmenge m wird dann die Gutdichte p p in 26 berechnet, was beispielsweise durch eine Datenverarbeitungseinrichtung geschehen kann. Basierend auf der in 26 berechneten Gutdichte p p wird dann in 27 mittels einer Korrekturfunktion f eine Nachkorrektur, hier und vorzugsweise in Form einer Dichtekompensation, eines Gutfeuchtesignals durchgeführt, das die Feuchtigkeitssensoranordnung 6, 6' basierend auf der gemessenen Feuchtigkeit δ erzeugt. Im Ergebnis wird daraus in 28 ein nachkorrigierter bzw. dichtekompensierter Feuchtigkeitswert δ_{NK} bzw. ein entsprechendes nachkorrigiertes bzw. dichtekompensiertes Gutfeuchtesignal erhalten.

### Bezugszeichenliste

- 1: Landwirtschaftliche Arbeitsmaschine
- 2: Einzugsanordnung
- 3a, 3b: Abgabeanordnung
- 4: Förderkanal
- 4a-4c: Abschnitte des Förderkanals
- 5,5': Volumensensoranordnung
- 6,6': Feuchtigkeitssensoranordnung
- 7,7': Durchsatzsensoranordnung
- 8: Datenverarbeitungseinrichtung
- 9: Vorsatzanordnung
- 10: Haspel
- 11: Messerbalken
- 12: Einzugsschnecke
- 13: Schrägförderer
- 14: Schneidwerk
- 15: Dreschwerk
- 16: Reinigungsvorrichtung
- 17: Kornelevator
- 18: Korntank
- 19: Trenneinrichtung
- 20: Befüllstromsensor
- 20': Korntankfüllstandssensor(en)
- 21, 21': Feuchtigkeitssensor
- 22: Schichthöhensensor
- 22': Kornsensor
- 23-28: Schritte im Ablaufdiagramm
- V: Durchsatzvolumen
- m: Durchsatzmenge
- δ: Feuchtigkeit
- δ_{NK}: nachkorrigierte Feuchtigkeit
- p: Gutdichte

## Patentansprüche

1. Landwirtschaftliche Arbeitsmaschine, insbesondere Mähdrescher oder Feldhäcksler, zur Aufnahme und Verarbeitung von Erntegut, mit einer Einzugsanordnung (2) zum Aufnehmen des Ernteguts, mit mindestens einer Abgabeanordnung (3a,3b) zur Abgabe von Erntegutbestandteilen, mit einer Volumensensoranordnung (5, 5') zur Bestimmung eines Durchsatzvolumens (V) des Ernteguts oder mindestens eines Erntegutbestandteils und mit einer Feuchtigkeitssensoranordnung (6,6') zur Messung einer Feuchtigkeit (δ) des aufgenommenen Ernteguts oder mindestens eines Erntegutbestandteils und zur Erzeugung eines auf der gemessenen Feuchtigkeit (δ) basierenden Gutfeuchtesignals,
wobei die landwirtschaftliche Arbeitsmaschine (1) ferner eine Durchsatzsensoranordnung (7,7') zur Bestimmung einer Durchsatzmenge (m) des Ernteguts oder mindestens eines Erntegutbestandteils aufweist, **dadurch gekennzeichnet, dass** das Gutfeuchtesignal basierend auf dem von der Volumensensoranordnung (5,5') ermittelten Durchsatzvolumen (V) und der von der Durchsatzsensoranordnung (7,7') ermittelten Durchsatzmenge (m) nachkorrigiert wird.

2. Landwirtschaftliche Arbeitsmaschine nach Anspruch 1, **dadurch gekennzeichnet, dass** die landwirtschaftliche Arbeitsmaschine (1) eine Datenverarbeitungseinrichtung (8) aufweist, die aus dem von der Volumensensoranordnung (5,5') ermittelten Durchsatzvolumen (V) und der von der Durchsatzsensoranordnung (7,7') ermittelten Durchsatzmenge (m) eine Gutdichte (p) bestimmt, wobei das Gutfeuchtesignal basierend auf der bestimmten Gutdichte (p) nachkorrigiert wird.

3. Landwirtschaftliche Arbeitsmaschine nach Anspruch 1 oder 2, **dadurch gekennzeichnet, dass** das Gutfeuchtesignal basierend auf der bestimmten Gutdichte (p) mittels einer Dichtekorrekturfunktion (f) nachkorrigiert wird.

4. Landwirtschaftliche Arbeitsmaschine nach einem der vorhergehenden Ansprüche, **dadurch gekennzeichnet, dass** ein Förderkanal (4) zum Fördern des Ernteguts und der Erntegutbestandteile vorgesehen ist, der von der Einzugsanordnung (2) zur Abgabeanordnung (3a,3b) verläuft, wobei die Volumensensoranordnung (5,5'), die Feuchtigkeitssensoranordnung (6,6') und/oder die Durchsatzsensoranordnung (7,7') am und/oder im Förderkanal (4) angeordnet ist/sind.

5. Landwirtschaftliche Arbeitsmaschine nach einem der vorhergehenden Ansprüche, **dadurch gekennzeichnet, dass** die Volumensensoranordnung (5), die Feuchtigkeitssensoranordnung (6) und/oder die Durchsatzsensoranordnung (7) an und/oder in einem Abschnitt (4c) des Förderkanals (4) angeordnet ist/sind, der von dem Erntegut durchströmt wird.

6. Landwirtschaftliche Arbeitsmaschine nach einem der vorhergehenden Ansprüche, **dadurch gekennzeichnet, dass** die Volumensensoranordnung (5'), die Feuchtigkeitssensoranordnung (6') und/oder die Durchsatzsensoranordnung (7') an und/oder in einem Abschnitt (4a, 4b) des Förderkanals (4) angeordnet ist/sind, der nach einem Abtrennen eines Erntegutbestandteils von dem übrigen Erntegut durchströmt wird.

7. Landwirtschaftliche Arbeitsmaschine nach einem der vorhergehenden Ansprüche, **dadurch gekennzeichnet, dass** die Volumensensoranordnung (5') mindestens einen Korntankfüllstandssensor (20') zur Bestimmung des Füllstands in einem Korntank (18) der landwirtschaftlichen Arbeitsmaschine (1) aufweist.

8. Landwirtschaftliche Arbeitsmaschine nach einem der vorhergehenden Ansprüche, **dadurch gekennzeichnet, dass** die Volumensensoranordnung (5) einen Befüllstromsensor (20) zur Bestimmung des Volumens (V) des Ernteguts nach dessen Aufnahme durch die Einzugsanordnung (2) aufweist.

9. Landwirtschaftliche Arbeitsmaschine nach einem der vorhergehenden Ansprüche, **dadurch gekennzeichnet, dass** die Feuchtigkeitssensoranordnung (6,6') mindestens einen kapazitiven Feuchtigkeitssensor (21,21') aufweist.

10. Landwirtschaftliche Arbeitsmaschine nach Anspruch 9, **dadurch gekennzeichnet, dass** mindestens ein kapazitiver Feuchtigkeitssensor (21,21') in der Einzugsschnecke (12), im Schrägförderer (13) und/oder im Kornelevator (17) der landwirtschaftlichen Arbeitsmaschine (1) angeordnet ist.

11. Landwirtschaftliche Arbeitsmaschine nach einem der vorhergehenden Ansprüche, **dadurch gekennzeichnet, dass** die Durchsatzsensoranordnung (7') mindestens einen Kornsensor (22') zur Bestimmung der Kornmenge aufweist.

12. Landwirtschaftliche Arbeitsmaschine nach Anspruch 11, **dadurch gekennzeichnet, dass** mindestens ein Kornsensor (22') im Kornelevator (17) der landwirtschaftlichen Arbeitsmaschine (1) angeordnet ist.

13. Landwirtschaftliche Arbeitsmaschine nach einem der vorhergehenden Ansprüche, **dadurch gekennzeichnet, dass** die Durchsatzsensoranordnung (7) mindestens einen Schichthöhensensor (22) zur Bestimmung der Schichthöhe des Ernteguts aufweist.

14. Landwirtschaftliche Arbeitsmaschine nach Anspruch 13, **dadurch gekennzeichnet, dass** mindestens ein Schichthöhensensor (22) im Schrägförderer (13) der landwirtschaftlichen Arbeitsmaschine (1) angeordnet ist.

15. Verfahren zum Betreiben einer landwirtschaftlichen Arbeitsmaschine (1), insbesondere nach einem der vorhergehenden Ansprüche, wobei die landwirtschaftliche Arbeitsmaschine (1) über eine Einzugsanordnung (2) Erntegut aufnimmt, ein Durchsatzvolumen (V) des Ernteguts oder mindestens eines Erntegutbestandteils über eine Volumensensoranordnung (5,5') bestimmt und eine Feuchtigkeit (δ) des aufgenommenen Ernteguts oder mindestens eines Erntegutbestandteils über eine Feuchtigkeitssensoranordnung (6,6') misst und darauf basierend ein Gutfeuchtesignal erzeugt,
**wobei** über eine Durchsatzsensoranordnung (7, 7') eine Durchsatzmenge (m) des Ernteguts oder mindestens eines Erntegutbestandteils bestimmt wird, **dadurch gekennzeichnet, dass** das Gutfeuchtesignal basierend auf dem von der Volumensensoranordnung (5, 5') ermittelten Durchsatzvolumen (V) und der von der Durchsatzsensoranordnung (7, 7') ermittelten Durchsatzmenge (m) nachkorrigiert wird.

## Claims

1. An agricultural working machine, in particular a combine harvester or forage harvester, for taking up and processing harvested material, with an intake assembly (2) for taking up harvested material, with at least one delivery assembly (3a, 3b) for delivering harvested material components, with a volume sensor system (5, 5') for determining a throughput volume (V) of the harvested material or at least one harvested material component and with a humidity sensor system (6, 6') for measuring a humidity (δ) of the harvested material or at least one harvested material component which has been taken up and for producing a material humidity signal based on the measured humidity (δ),
wherein the agricultural working machine (1) furthermore has a throughput sensor system (7, 7') for determining a throughput quantity (m) of the harvested material or at least one harvested material component, **characterized in that** the material humidity signal is readjusted on the basis of the throughput volume (V) determined by the volume sensor system (5, 5') and the throughput quantity (m) determined by the throughput sensor system (7, 7').

2. The agricultural working machine according to claim 1,
**characterized in that** the agricultural working machine (1) has a data processing device (8) which determines a material density (p) from the throughput volume (V) determined by the volume sensor system (5, 5') and the throughput quantity (m) determined by the throughput sensor system (7, 7'), wherein the material humidity signal is readjusted on the basis of the determined material density (p).

3. The agricultural working machine according to claim 1 or claim 2, **characterized in that** the material humidity signal is readjusted on the basis of the determined material density (p) by means of a density correction function (f).

4. The agricultural working machine according to one of the preceding claims, **characterized in that** a feeder channel (4) is provided for feeding the harvested material and the harvested material components and which runs from the intake assembly (2) to the delivery assembly (3a, 3b), wherein the volume sensor system (5, 5'), the humidity sensor system (6, 6') and/or the throughput sensor system (7, 7') is/are disposed on and/or in the feeder channel (4).

5. The agricultural working machine according to one of the preceding claims, **characterized in that** the volume sensor system (5), the humidity sensor system (6) and/or the throughput sensor system (7) is/are disposed on and/or in a section (4c) of the feeder channel (4) through which the harvested material flows.

6. The agricultural working machine according to one of the preceding claims, **characterized in that** the volume sensor system (5'), the humidity sensor system (6') and/or the throughput sensor system (7') is/are disposed on and/or in a section (4a, 4b) of the feeder channel (4) through which the remaining harvested material flows following separation of a component of the harvested material.

7. The agricultural working machine according to one of the preceding claims, **characterized in that** the volume sensor system (5') has at least one grain tank fill level sensor (20') for determining the fill level in a grain tank (18) of the agricultural working machine (1).

8. The agricultural working machine according to one of the preceding claims, **characterized in that** the volume sensor system (5) has a fill flow sensor (20) for determining the volume (V) of the harvested material through the intake assembly (2) after it has been taken up.

9. The agricultural working machine according to one of the preceding claims, **characterized in that** the humidity sensor system (6, 6') has at least one capacitive humidity sensor (21, 21').

10. The agricultural working machine according to claim 9, **characterized in that** the at least one capacitive humidity sensor (21, 21') is disposed in the intake auger (12), in the inclined conveyer (13) and/or in the grain elevator (17) of the agricultural working machine (1).

11. The agricultural working machine according to one of the preceding claims, **characterized in that** the throughput assembly (7) has at least one grain sensor (22') for determining the quantity of grain.

12. The agricultural working machine according to claim 11, **characterized in that** at least one grain sensor (22') is disposed in the grain elevator (17) of the agricultural working machine (1).

13. The agricultural working machine according to one of the preceding claims, **characterized in that** the throughput sensor system (7) has at least one layer height sensor (22) for determining the layer height of the harvested material.

14. The agricultural working machine according to claim 13, **characterized in that** at least one layer height sensor (22) is disposed in the inclined conveyer (13) of the agricultural working machine (1).

15. A method for operating an agricultural working machine (1), in particular according to one of the preceding claims, wherein the agricultural working machine (1) takes up harvested material via an intake assembly (2), determines a throughput volume (V) of the harvested material or at least one harvested material component via a volume sensor system (5, 5') and measures a humidity (δ) of the harvested material or harvested material component which has been taken up via a humidity sensor system (6, 6') and produces a material humidity signal on the basis of it,
**wherein** a throughput quantity (m) is determined for the harvested material or at least one harvested material component via a throughput sensor system (7, 7'), **characterized in that** the material humidity signal is readjusted on the basis of the throughput volume (V) determined by the volume sensor system (5, 5') and the throughput quantity (m) determined by the throughput sensor system (7, 7').

## Revendications

1. Machine de travail agricole, en particulier moissonneuse-batteuse ou ensileuse, pour ramasser et traiter du produit récolté, comprenant un agencement d'alimentation (2) pour ramasser le produit récolté, comprenant au moins un agencement de restitution (3a, 3b) pour restituer des composants de produit récolté, comprenant un agencement de capteur de volume (5, 5') pour déterminer un volume de débit (V) du produit récolté ou au moins d'un composant de produit récolté, et comprenant un agencement de capteur d'humidité (6, 6') pour mesurer une humidité (δ) du produit de récolte ramassé ou au moins d'un composant de produit récolté et pour générer un signal d'humidité de produit basé sur l'humidité mesurée (δ),
la machine de travail agricole (1) comprenant en outre un agencement de capteur de débit (7, 7') pour déterminer un débit (m) du produit récolté ou au moins d'un composant de produit récolté, **caractérisée en ce que** le signal d'humidité de produit est recorrigé sur la base du volume de débit (V) déterminé par l'agencement de capteur de volume (5, 5') et du débit (m) déterminé par l'agencement de capteur de débit (7, 7').

2. Machine de travail agricole selon la revendication 1, **caractérisée en ce que** la machine de travail agricole (1) comporte un équipement de traitement de données (8) qui définit une densité de produit (p) à partir du volume de débit (V) déterminé par l'agencement de capteur de volume (5, 5') et du débit (m) déterminé par l'agencement de capteur de débit (7, 7'), le signal d'humidité de produit étant recorrigé sur la base de la densité de produit déterminée (ρ).

3. Machine de travail agricole selon la revendication 1 ou 2, **caractérisée en ce que** le signal d'humidité de produit est recorrigé sur la base de la densité de produit déterminée (p) au moyen d'une fonction de correction de densité (f).

4. Machine de travail agricole selon une des revendications précédentes, **caractérisée en ce qu'**un canal d'alimentation (4) pour alimenter le produit récolté et les composants de produit récolté est prévu, lequel s'étend de l'agencement d'alimentation (2) à l'agencement de restitution (3a, 3b), l'agencement de capteur de volume (5, 5), l'agencement de capteur d'humidité (6, 6') et/ou l'agencement de capteur de débit (7, 7') étant disposé/disposés sur et/ou dans le canal d'alimentation (4).

5. Machine de travail agricole selon une des revendications précédentes, **caractérisée en ce que** l'agencement de capteur de volume (5), l'agencement de capteur d'humidité (6) et/ou l'agencement de capteur de débit (7) est disposé/sont disposés sur et/ou dans une portion (4c) du canal d'alimentation (4) qui est parcourue par le produit récolté.

6. Machine de travail agricole selon une des revendications précédentes, **caractérisée en ce que** l'agencement de capteur de volume (5'), l'agencement de capteur d'humidité (6') et/ou l'agencement de capteur de débit (7') est disposé/sont disposés sur et/ou dans une portion (4a, 4b) du canal d'alimentation (4) qui, après une séparation d'un composant de produit récolté, est parcourue par le produit récolté restant.

7. Machine de travail agricole selon une des revendications précédentes, **caractérisée en ce que** l'agencement de capteur de volume (5') comporte au moins un capteur de niveau de remplissage de trémie à grain (20') pour déterminer le niveau de remplissage dans une trémie à grain (18) de la machine de travail agricole (1).

8. Machine de travail agricole selon une des revendications précédentes, **caractérisée en ce que** l'agencement de capteur de volume (5) comporte un capteur de flux de remplissage (20) pour déterminer le volume (V) du produit récolté, après son ramassage, à travers l'agencement d'alimentation (2).

9. Machine de travail agricole selon une des revendications précédentes, **caractérisée en ce que** l'agencement de capteur d'humidité (6, 6') comporte au moins un capteur d'humidité capacitif (21, 21').

10. Machine de travail agricole selon la revendication 9, **caractérisée en ce qu'**au moins un capteur d'humidité capacitif (21, 21') est disposé dans la vis d'alimentation (12), dans le convoyeur incliné (13) et/ou dans l'élévateur de grains (17) de la machine de travail agricole (1).

11. Machine de travail agricole selon une des revendications précédentes, **caractérisée en ce que** l'agencement de capteur de débit (7') comporte au moins un capteur de grain (22') pour déterminer la quantité de grain.

12. Machine de travail agricole selon la revendication 11, **caractérisée en ce qu'**au moins un capteur de grain (22') est disposé dans l'élévateur de grains (17) de la machine de travail agricole (1).

13. Machine de travail agricole selon une des revendications précédentes, **caractérisée en ce que** l'agencement de capteur de débit (7) comporte au moins un capteur de hauteur de couche (22) pour déterminer la hauteur de couche du produit récolté.

14. Machine de travail agricole selon la revendication 13, **caractérisée en ce qu'**au moins un capteur de hauteur de couche (22) est disposé dans le convoyeur incliné (13) de la machine de travail agricole (1).

15. Procédé de fonctionnement d'une machine de travail agricole (1), en particulier selon une des revendications précédentes, la machine de travail agricole (1) ramassant du produit récolté par l'intermédiaire d'un agencement d'alimentation (2), déterminant un volume de débit (V) du produit récolté ou au moins d'un composant de produit récolté par l'intermédiaire d'un agencement de capteur de volume (5, 5') et mesurant une humidité (δ) du produit de récolte ramassé ou au moins d'un composant de produit récolté par l'intermédiaire d'un agencement de capteur d'humidité (6, 6') et générant, sur la base de celle-ci, un signal d'humidité de produit,
un débit (m) du produit récolté ou au moins d'un composant de produit récolté étant déterminé par l'intermédiaire d'un agencement de capteur de débit (7, 7'), **caractérisé en ce que** le signal d'humidité de produit est recorrigé sur la base du volume de débit (V) déterminé par l'agencement de capteur de volume (5, 5') et du débit (m) déterminé par l'agencement de capteur de débit (7, 7').
